# EUROPEAN PATENT APPLICATION

(11) **EP 3 276 927 A1**
(43) Date of publication of application: **31.01.2018**
(21) Application number: 17181632.5
(22) Date of filing: 17.07.2017
(51) Int. Cl.: H04M 1/725

(54) **METHOD AND APPARATUS FOR ADJUSTING HANDSET MODES**

(30) Priority: 25.07.2016 CN 201610592483
(71) Applicant: Beijing Xiaomi Mobile Software Co., Ltd., Beijing 100085 (CN)
(72) Inventor: ZHU, Ruixian, Haidian District, Beijing 100085 (CN); PAN, Long, Haidian District, Beijing 100085 (CN); WANG, Shuo, Haidian District, Beijing 100085 (CN)
(74) Representative: Loustalan, Paul William

(57) **Abstract**

The present disclosure relates to a method an apparatus for adjusting handset modes. The method includes: acquiring (101), upon a user subscribing to a specified service, service information of the specified service; and adjusting (102) automatically a handset to a mode corresponding to the specified service at a timepoint corresponding to the specified service according to the service information. According to the technical proposal of the present disclosure, the user operation is greatly facilitated and the user experience can be improved.

## Description

### TECHNICAL FIELD

The present disclosure relates to the field of intelligent terminals, and more particularly to a method and an apparatus for adjusting handset modes.

### BACKGROUND

With the development of smart phones, mobile phones play a more and more important role in people's lives, and the mobile phones are needed to be more and more intelligent. It will greatly improve the user's experience if states of the mobile phone could be automatically adjusted according to the user's application scene. In related art, however, the user is usually required to manually add scheduled time to the calendar and set it in the form of alarm clock, such that the user can be prompted of not missing travel of aircraft, high-speed rail or missing movies and other services. Therefore, the current function of mobile phones in this field is not intelligent enough, which cannot make full use of already obtained information to assist the user. Thus, the user experience is poor since manual operation is necessary.

### SUMMARY

A method and an apparatus for adjusting handset modes are provided by embodiments of the present disclosure. The technical solutions are as follows.

According to a first aspect of the embodiments of the present disclosure, a method for adjusting handset modes is provided. The method includes:
acquiring, upon subscribing to a specified service, service information of the specified service; and
adjusting automatically a handset to a mode corresponding to the specified service at a timepoint corresponding to the specified service according to the service information.

Optionally, the specified service includes at least one of: a flight service; a high-speed rail service; and a group service; and
the mode corresponding to the specified service includes at least one of an off mode, a flight mode, a high-speed rail mode and a silent mode.

Optionally, the service information includes a service name, a service occurrence location, a service start time, a service end time, and a service object.

Optionally, the method further includes:
determining whether the specified service is subscribed to by a user;
wherein the step of determining whether the specified service is subscribed to by a user includes:
   determining whether the specified service is subscribed to via an application; and/or
   determining whether a notification message including the service information of the specified service is received.

Optionally, the step of acquiring service information of the specified service includes:
acquiring the service information of the specified service from the application; and/or
acquiring the service information of the specified service from the notification message.

Optionally, the step of adjusting automatically a handset to a mode corresponding to the specified service at a timepoint corresponding to the specified service according to the service information includes:
prompting a user, before the specified service starts, whether to adjust the handset to the mode; and
adjusting, according to the user's instruction, the handset to the mode and restoring, after the specified service ends, the handset to a previous mode.

Optionally, the step of adjusting automatically a handset to a mode corresponding to the specified service at a timepoint corresponding to the specified service according to the service information includes:
determining whether a current location of the handset is consistent with a service occurrence location of the specified service; and
adjusting automatically, when the current location of the handset is consistent with the service occurrence location of the specified service, the handset to the mode corresponding to the specified service at the timepoint corresponding to the specified service.

Optionally, the step of adjusting automatically a handset to a mode corresponding to the specified service at a timepoint corresponding to the specified service according to the service information includes:
determining whether a service object of the specified service is a user of the handset; and
adjusting automatically, when the service object of the specified service is the user of the handset, the handset to the mode corresponding to the specified service at the timepoint corresponding to the specified service.

Optionally, the method further includes, before the step of adjusting automatically a handset to a mode corresponding to the specified service at a timepoint corresponding to the specified service according to the service information:
acquiring updated service information of the specified service.

Optionally, the step of acquiring updated service information of the specified service includes:
acquiring, by automatically retrieving from a network server, the updated service information of the specified service according to an identifier of the specified service; and/or
acquiring the updated service information of the specified service by parsing a received notification message.

According to a second aspect of embodiments of the disclosure, an apparatus for adjusting handset modes is provided. The apparatus includes:
an acquisition module configured to acquire, upon a user subscribing to a specified service, service information of the specified service;
an adjustment module configured to adjust automatically a handset to a mode corresponding to the specified service at a timepoint corresponding to the specified service according to the service information.

Optionally, the specified service includes at least one of a flight service, a high-speed rail service and a group service; and
the mode corresponding to the specified service includes at least one of: an off mode; a flight mode; a high-speed rail mode; and a silent mode.

Optionally, the service information includes a service name, a service occurrence location, a service start time, a service end time, and a service object.

Optionally, the apparatus further includes:
a determination module configured to determine whether the specified service is subscribed to by a user;
wherein the determination module includes:
   a first determination submodule configured to determine whether the specified service is subscribed to via an application; and/or
   a second determination submodule configured to determine whether a notification message including the service information of the specified service is received.

Optionally, the acquisition module includes:
a first acquisition submodule configured to acquire the service information of the specified service from the application; and/or
a second acquisition submodule configured to acquire the service information of the specified service from the notification message.

Optionally, the adjustment module includes:
a prompt submodule configured to prompt a user, before the specified service starts, whether to adjust the handset to the mode; and
a first adjustment submodule configured to adjust, according to the user's instruction, the handset to the mode and restore, after the specified service ends, the handset to a previous mode.

Optionally, the adjustment module includes:
a third determination submodule configured to determine whether a current location of the handset is consistent with a service occurrence location of the specified service; and
a second adjustment submodule configured to automatically adjust, when the current location of the handset is consistent with the service occurrence location of the specified service, the handset to the mode corresponding to the specified service at the timepoint corresponding to the specified service.

Optionally, the adjustment module includes:
a fourth determination submodule configured to determine whether a service object of the specified service is a user of the handset; and
a third adjustment submodule configured to automatically adjust, when the service object of the specified service is the user of the handset, the handset to the mode corresponding to the specified service at the timepoint corresponding to the specified service.

Optionally, prior to the adjustment module, the apparatus further includes:
an updating module configured to acquire updated service information of the specified service.

Optionally, the updating module includes:
a first updating submodule configured to acquire, by automatically retrieving from a network server, the updated service information of the specified service according to an identifier of the specified service; and/or
a second updating submodule configured to acquire the updated service information of the specified service by parsing a received notification message.

According to a third aspect of embodiments of the disclosure, an apparatus for adjusting handset modes is provided. The apparatus includes:
a processor; and
a memory configured to store instructions executable by the processor;
wherein the processor is configured to:
   acquire, upon a user subscribing to a specified service, service information of the specified service; and
   adjust automatically a handset to a mode corresponding to the specified service at a timepoint corresponding to the specified service according to the service information.

Optionally, the processor is further configured to carry out any method as described above.

According to a third aspect of embodiments of the disclosure, there is provided a computer program, which when executing on a processor, performs any method as described above.

According to technical solution provided by the embodiments of the disclosure, following advantageous effect may be achieved.

Through the technical solution, service information of a specified service can be acquired according to the specified service subscribed to by a user and, further, the mobile phone can be automatically adjusted to a corresponding mode according to the service information during the specified service. According to the present disclosure, for the user who subscribes to certain services in a specific period of time, such as flight services, high-speed rail services, or group services (e.g. movie services), when it is monitored that the user subscribes to these services via a mobile app or by parsing from a text message or through any other means, the handset can be automatically adjusted to a corresponding mode, such as flight mode, high-speed rail mode, silent mode and the like, before the specified service starts. The user is greatly facilitated and, thus, user experience can be improved through the technical solution of the disclosure.

It should be understood that the above general description and the detailed description below are merely exemplary and explanatory, and do not limit the present disclosure.

### BRIEF DESCRIPTION OF THE DRAWINGS

The accompanying drawings are incorporated in and constitute a part of this specification, illustrate embodiments conforming to the disclosure and together with the description serve to explain the principles of the disclosure.
Fig. 1 is a flow chart illustrating a method for adjusting handset modes according to an exemplary embodiment.
Fig. 2 is a flow chart illustrating a method for adjusting handset modes according to an exemplary embodiment.
Fig. 3 is a flow chart illustrating a method for adjusting handset modes according to an exemplary embodiment.
Fig. 4 is a block diagram illustrating an apparatus for adjusting handset modes according to an exemplary embodiment.
Fig. 5 is a block diagram illustrating an apparatus applicable for adjusting handset modes according to an exemplary embodiment.

### DETAILED DESCRIPTION

Descriptions will now be made in detail to exemplary embodiments, examples of which are illustrated in the accompanying drawings. When accompanying figures are mentioned in the following descriptions, the same numbers in different drawings represent the same or similar elements, unless otherwise represented. The implementations set forth in the following description of exemplary embodiments do not represent all implementations consistent with the invention. Instead, they are merely examples of apparatus and methods consistent with aspects related to the disclosure as recited in the appended claims.

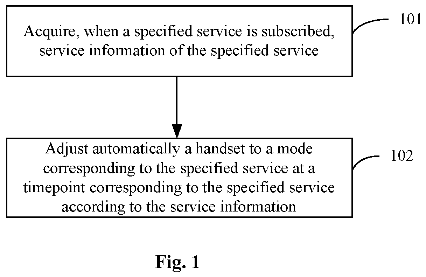

Fig. 1 is a flow chart illustrating a method for adjusting handset modes according to an exemplary embodiment. As shown in Fig. 1, the method for adjusting handset modes is applicable in a mobile terminal and includes following steps 101-102.

In step 101, it is acquired, when a specified service is subscribed by a user, service information of the specified service.

In step 102, a handset is adjusted automatically to a mode corresponding to the specified service at a timepoint corresponding to the specified service according to the service information.

In the present embodiment, by determining whether the user has subscribed to the specified service, the service information such as time, location, and the like of the specified service is acquired if the user subscribes to the specified service such as flight service, high-speed rail service, group service, etc. Then, the handset may be adjusted to a mode corresponding to the specified service before the service is started according to the service information. According to the method of the embodiment, the handset can be adjusted to a proper mode according to the behavior of the user at the right time without manual operation by the user, which greatly facilitates the use of the user's handset and improves the user experience.

In an embodiment, the specified service is a service that needs a handset mode to be adjusted during it, such as flight service, high-speed rail service and group service. The mode corresponding thereto may include a shutdown mode, a flight mode, a high-speed rail mode and a silent mode. The mode corresponding to the flight service may be a shutdown mode or a flight mode, the mode corresponding to the high-speed rail service may be a shutdown mode or a high-speed rail mode, and the mode corresponding to the group service may be a shutdown mode or a silent mode. A specific mode corresponding thereto may be preset by the user or selected by the user in a mode adjustment. The group service involves various services such as watching a movie, a show, a drama or a concert, or participating in meetings or other group activities requiring the handset to be muted. The service information may include a service occurrence location, a service start time, a service end time, and a service object. In an embodiment, the service object is a person's name participating in the service. For example, if a ticket is booked by the user, then the service object is a passenger recorded on the ticket.

In an embodiment, the method further includes: it is determined whether the specified service is subscribed by a user. Whether the specified service is subscribed by a user may be determined by determining whether the specified service is subscribed via an application and/or determining whether a notification message containing the service information of the specified service is received. The application may be an APP installed in the terminal or an Internet application. The service information of the specified service may be acquired by obtaining the service information of the specified service from the application and/or obtaining the service information of the specified service from the notification message. There are many ways for the user to subscribe to the service, but in the current era of well-developed mobile phone and Internet, the services are usually scheduled through the relevant app on the terminal in vast majority of cases. Even without the APP on the terminal, service providers may also notify by SMS (Short Message Service) personnel participating in the service which is purchased on-site or scheduled through a computer via network. Therefore, in the present embodiment, it is possible to determine whether or not the user subscribes to the specified service by monitoring in real time the application program or the content of the message on the terminal. For example, it may be determined whether the user subscribes to a flight service by monitoring an app for ordering tickets, such as Ctrip^{™}, eLong^{™}, Qunar^{™}, etc.; it may be determined whether the user orders a high-speed rail ticket by monitoring an app such as 12306^{™}; and it may also be determined whether an order is performed on an website for ordering air tickets, high-speed rail tickets, movie tickets and the like by monitoring the browser app on the handset. Further, it is also possible to monitor a message received by the user, to determine whether the notification message refers to a specified service or the like.

In an embodiment, a keyword related to the specified service, an app to be monitored and the like may be set in advance on the handset. For example, set keywords may include: aircraft, flight tickets, bus tickets, train tickets, movie tickets, a latest movie name, and so on. An app name and an app address may also be set such that, once the user opens the specified app, it can be initiated to monitor user operations on the app, determined whether the user subscribes to the specified service based on the set keyword and an user interface corresponding to the app. Moreover, content of received messages can be monitored to determine whether the user subscribes to the specified service based on a keyword matching method. The keyword, the app name and the like can be retrieved from the server and updated in real time.

In an embodiment, upon determining that the user subscribes to a specified service via the app, information related to the specified service is obtained from the app, including the service name, the location where the service occurs, the service start time, the service end time, and the service object. For example, if a user subscribes to a flight ticket through the Ctrip^{™} app, information of the ticket service, such as flight service name, check-in point, flight time, name of the passenger, etc., needs to be acquired from the Ctrip^{™} app. The ticket service information may be acquired by automatically logging in and querying the Ctrip^{™} APP with authorization of the user; or acquired by querying via the API (Application Program Interface) provided by the Ctrip^{™} app; or acquired through a notification message pushed to the user by the Ctrip^{™} APP. In addition, after the notification message, such as a SMS or a Wechat^{™} message, corresponding to the specified service as subscribed is received, content of the notification message is parsed to acquire the service information of the specified service. For example, when a user receives a SMS notification indicative of successfully subscribing to a movie ticket, the movie name, the theater, the start time, and the end time may be obtained from the ticket through the keyword matching method.

In an embodiment, the automatically adjusting a handset to a mode corresponding to the specified service at a timepoint corresponding to the specified service according to the service information is performed by: prompting a user, before the specified service starts, whether to adjust the handset to the mode; and adjusting, according to the user's instruction, the handset to the mode and restoring, after the specified service ends, the handset to a previous mode. After the service information of the specified service is acquired, a timer can be set in accordance with the service start time in the service information, and after the timer is finished, the user may be prompted whether to adjust the handset to the corresponding mode. For example, if a user has booked a flight service, a timer is set to complete a few minutes before the flight takes off. After the timer has timed out, a message may be displayed informing the user whether to adjust the handset to a flight or shutdown mode. If a positive indication is received from the user, the handset is set to either a flight mode or an off mode. In another embodiment, it is also possible to set the handset to the corresponding mode directly before the start of the service time, depending on the user's previous configuration. The "before the start of the service time" may refer to a predetermined time before the service start time, for example, a few minutes before the service start time and the like, which may be preset according to actual situation.

In an embodiment, the automatically adjusting a handset to a mode corresponding to the specified service at a timepoint corresponding to the specified service according to the service information is performed by: determining whether a current location of the handset is consistent with a service occurrence location of the specified service; and adjusting automatically, when the current location of the handset is consistent with the service occurrence location of the specified service, the handset to the mode corresponding to the specified service at the timepoint corresponding to the specified service. There may be a case that a user subscribes to a service for another person instead of himself, for example, an ordered movie ticket is sent to a friend. In such case, when the user's default setting is to adjust the handset directly to the mode corresponding to the specified service before the service starts, it may be determined, before the adjustment, whether the use's handset is located in the service occurrence location. If the handset is not located in the service occurrence location, then the handset can be adjusted to the mode corresponding to the specified service before the service starts. However, if the handset is located in the service occurrence location, which indicates that the user may not participate in the service and the service may be booked for others, then the handset can not be adjusted to the corresponding mode, but should be maintained at the original mode or to prompt the user whether to adjust the handset mode.

In an embodiment, the automatically adjusting a handset to a mode corresponding to the specified service at a timepoint corresponding to the specified service according to the service information is performed by: determining whether a service object of the specified service is a user of the handset; and adjusting automatically, when the service object of the specified service is the user of the handset, the handset to the mode corresponding to the specified service at the timepoint corresponding to the specified service. This method is suitable for the case where the service object can be obtained directly from the service information and the name of the handset user is set in advance. For example, if the user has subscribed to a flight service, and a passenger name in the acquired service information of the flight service matches the preset name of the handset user, it can be determined that the service object is the handset user and, then, the handset may be automatically adjusted to a corresponding mode before the aircraft takes off. If the service object in the in the service information does not match the name of the handset user, the service object corresponding to the service may be not the handset user, then the handset cannot be adjusted directly to the corresponding mode. Instead, a next action may be determined by prompting the user whether to perform the adjustment.

In an embodiment, before adjusting automatically a handset to a mode corresponding to the specified service at a timepoint corresponding to the specified service according to the service information, the method further includes: acquiring updated service information of the specified service. Since the service information of the specified service, such as the service time, the service location, and the like, may be changed after the subscription, it is necessary to obtain the updated information of the service information before the mode adjustment. If the service information is not updated, it may result in adjusting the handset into an inappropriate mode at an inappropriate time, which causes missing calls and so on. For example, when the flight service is delayed due to weather or other reasons, if the aircraft departure time is not updated in time and the handset is adjusted to the shutdown mode or flight mode at the original departure time, the handset can not be available during this period.

In an embodiment, the updated service information of the specified service may be obtained by: acquiring, by automatically retrieving from a network server, the updated service information of the specified service according to an identifier of the specified service; and/or acquiring the updated service information of the specified service by parsing a received notification message. The updated service information of the specified service can be acquired in many ways. For example, the latest service information can be acquired by inquiring a related website according to the service name. Alternatively, the updated service information can be obtained by analyzing the content of a notification message being received. Otherwise, the updated service information may be acquired from a dedicated server or manually entered by the user. For example, the user booked a ticket of China Southern Airlines^{™}, then the latest departure time may be acquired from the China Southern Airlines^{™} official website based on the flight number, or from an SMS message sent from China Southern Airlines.

The technical solution of the present disclosure will be described with reference to a specific embodiment herein below.

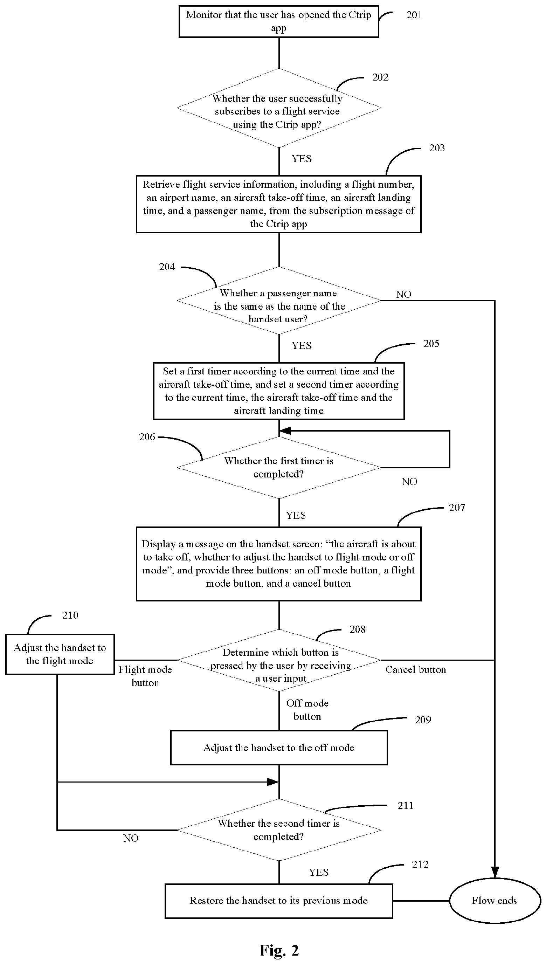

In the embodiment, a detailed description is given taking an example where the specified service is a flight ticket service. As shown in Fig. 2, a detailed process includes following steps.

In step 201, it is monitored that the user has opened the Ctrip^{™} app.

In step 202, it is determined whether the user has successfully subscribed to a flight service using the Ctrip^{™} app and, if yes, step 203 is performed.

In step 203, flight service information, including a flight number, an airport name, an aircraft take-off time, an aircraft landing time, and a passenger name, is retrieved from the subscription message of the Ctrip^{™} app.

In step 204, it is determined whether a passenger name is the same as the name of the handset user. If yes, the flow goes to step 205, and if no, the flow ends.

In step 205, a first timer is set according to the current time and the aircraft take-off time, and a second timer is set according to the current time, the aircraft take-off time and the aircraft landing time.

In step 206, it is judged whether the first timer is completed, and if yes, step 206 is performed; otherwise, the first timer continues to be monitored.

In step 207, a message is displayed on the handset screen, for example, "the aircraft is about to take off, whether to adjust the handset to a flight mode or an off mode". At the same time, three buttons may be provided: an off mode button, a flight mode button, and a cancel button.

In step 208, it is determined which button is pressed by the user by receiving a user input; if the user presses the off mode button, step 209 is performed; if the user presses the flight mode button; step 210 is performed; and if the user presses the cancel button, the flow ends.

In step 209, the handset is adjusted to the off mode, and step 211 is performed.

In step 210, the handset is adjusted to the flight mode, and step 211 is performed.

In step 211, it is judged whether the second timer is completed; if yes, step 212 is performed; and if not, the second timer continues to be monitored.

In step 212, the handset is restored to its previous mode and the flow ends.

In the present embodiment, when it is detected that the flight service is ordered by the user through an app, the flight service information can be acquired from the corresponding app. Then, the name of the flight passenger in the flight information is compared with the name of the handset user, and only when the name matches, the timer is set. When the timer is completed, the user is prompted of whether to adjust the handset to the off mode or the flight mode, and the handset is adjusted to a mode selected by the user under his/her instruction. After landing of the flight, the handset is automatically restored into the previous mode. According to the technical proposal of the embodiment, the user can be prompted to adjust the handset to the shutdown mode or the flight mode before the plane takes off, and the handset mode can be automatically adjusted under the instruction of the user, which greatly facilitates the user and enhances the user experience.

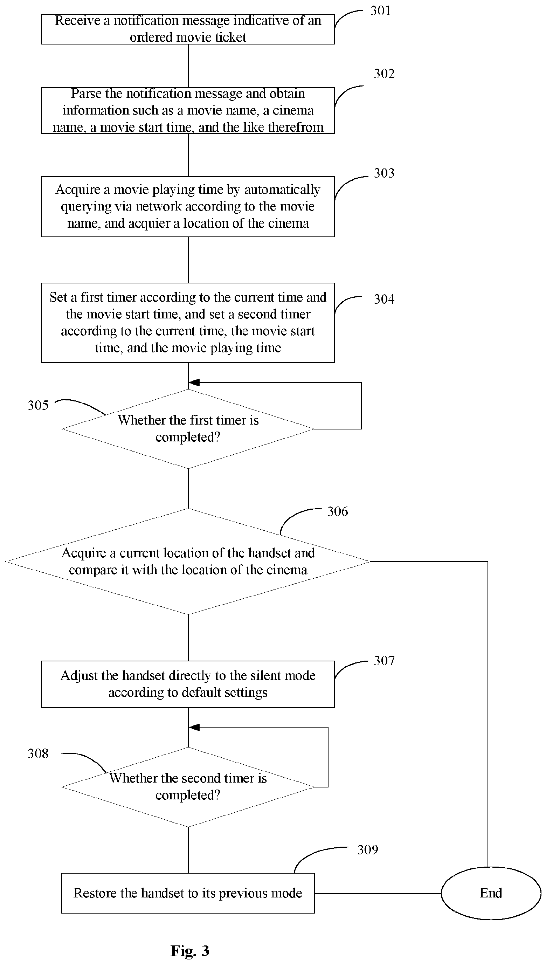

In another embodiment, a detailed description is given taking an example where the specified service is a movie service. As shown in Fig. 3, detailed process includes following steps.

In step 301, a notification message indicative of an ordered movie ticket is received.

In step 302, the notification message is parsed and information such as a movie name, a cinema name, a movie start time, and the like are obtained therefrom.

In step 303, a movie playing time is acquired by automatically querying via network according to the movie name, and a location of the cinema is acquired according to the cinema name.

In step 304, a first timer is set according to the current time and the movie start time, and a second timer is set according to the current time, the movie start time, and the movie playing time.

In step 305, it is determined whether the first timer is completed; if yes, step 306 is performed; and otherwise, the first timer continues to be monitored.

In step 306, a current location of the handset is acquired and compared with the location of the cinema; if the current location of the handset is consistent with the location of the cinema, step 307 is performed; and otherwise, the flow ends.

In step 307, the handset is directly adjusted to the silent mode according to default settings.

In step 308, it is determined whether the second timer is completed; if yes, step 309 is performed; and if no, the second timer continues to be monitored.

In step 309, the handset is restored to its previous mode and the flow ends.

In this embodiment, after the notification message indicative of the ordered movie ticket is received, related information of the movie is obtained from the notification message. For example, the movie ending time may be obtained based on a playing time of the movie and duration of the movie which are acquired automatically. The location of the cinema may be obtained according to the cinema name and, then, is compared with the location of the handset before the start of the movie. If the locations match, the handset user may be regarded as being in the cinema, and then, the handset may be automatically adjusted to the silent mode. After the movie is over, the handset is automatically restored to its previous mode. However, if the current location of the handset does not match the location of the movie theater, it may be deemed that the movie ticket may be scheduled for another person and, thus, the process ends directly. According to the technical proposal of the embodiment, it is possible to automatically adjust the user's handset to the silent mode without the need of manual operation by the user before the start of the movie in the case where the user has subscribed to the movie ticket, thereby greatly facilitating the operation of the user and improving user experience.

An apparatus according to embodiments of the disclosure that may be used to implement embodiments of the disclosed method will be described as follows.

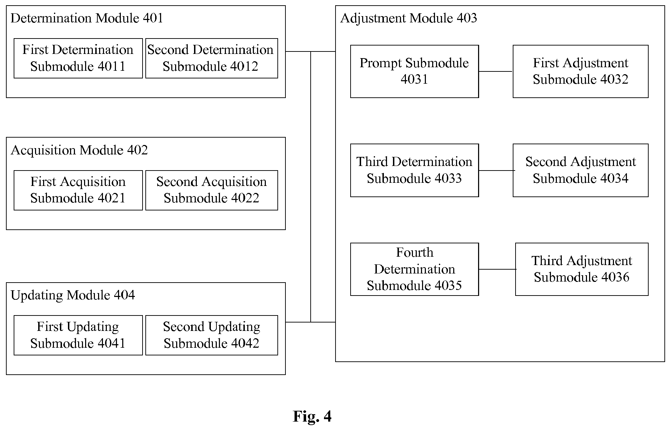

Fig. 4 is a block diagram illustrating an apparatus for adjusting handset modes according to an exemplary embodiment, which may be implemented as part or all of an electronic device by software, hardware, or a combination of both. As shown in Fig. 4, the apparatus for adjusting handset modes includes following modules.

In a determination module 401, it is configured to determine whether a specified service is subscribed by a user. The specified service refers to a service that needs a handset mode to be adjusted during it. The specified service may include at least one of a flight service, a high-speed rail service and a group service. The mode corresponding to the specified service may include at least one of an off mode, a flight mode, a high-speed rail mode and a silent mode

In an acquisition module 402, it is configured to acquire, when the specified service is subscribed by the user, service information of the specified service. The service information may include a service name, a service occurrence location, a service start time, a service end time, and a service object.

In an adjustment module 403, it is configured to adjust automatically a handset to a mode corresponding to the specified service at a timepoint corresponding to the specified service according to the service information.

In an updating module 404, it is configured to acquire updated service information of the specified service prior to the adjustment module.

The determination module 401 may include following submodules.

In a first determination submodule 4011, it is configured to determine whether the specified service is subscribed via an application; and/or
in a second determination submodule 4012, it is configured to determine whether a notification message including the service information of the specified service is received.

The acquisition module 402 may include following submodules.

In a first acquisition submodule 4021, it is configured to acquire the service information of the specified service from the application; and/or
in a second acquisition submodule 4022, it is configured to acquire the service information of the specified service from the notification message.

The adjustment module 403 may include following submodules.

In a prompt submodule 4031, it is configured to prompt a user, before the specified service starts, whether to adjust the handset to the mode.

In a first adjustment submodule 4032, it is configured to adjust, according to the user's instruction, the handset to the mode and restore, after the specified service ends, the handset to a previous mode.

In a third determination submodule 4033, it is configured to determine whether a current location of the handset is consistent with a service occurrence location of the specified service.

In a second adjustment submodule 4034, it is configured to automatically adjust, when the current location of the handset is consistent with the service occurrence location of the specified service, the handset to the mode corresponding to the specified service at the timepoint corresponding to the specified service.

In a fourth determination submodule 4035, it is configured to determine whether a service object of the specified service is a user of the handset.

In a third adjustment submodule 4036, it is configured to automatically adjust, when the service object of the specified service is the user of the handset, the handset to the mode corresponding to the specified service at the timepoint corresponding to the specified service.

The updating module 404 may include following submodule.

In a first updating submodule 4041, it is configured to acquire, by automatically retrieving from a network server, the updated service information of the specified service according to an identifier of the specified service; and/or
in a second updating submodule 4042, it is configured to acquire the updated service information of the specified service by parsing a received notification message.

In the present embodiment, the determination module 401 determines whether the user has subscribed to the specified service. If the user subscribes to the specified service such as a flight service, a high-speed rail service, a movie service, and the like, the acquisition module 402 acquires the service information of the specified service, such as time, location and so on. Then the adjustment module 403 may adjust the handset to the mode corresponding to the specified service before the service starts according to the service information. Through the method of the embodiment, the handset can be adjusted to the proper mode according to the behavior of the user at the right time without manual operation by the user, which greatly facilitates the operation of the user and improves the user experience.

According to the third aspect of embodiments of the disclosure, an apparatus for adjusting handset modes is provided. The apparatus includes:
a processor; and
a memory configured to store instructions executable by the processor;
wherein the processor is configured to:
   acquire, when a specified service is subscribed by a user, service information of the specified service; and
   adjust automatically a handset to a mode corresponding to the specified service at a timepoint corresponding to the specified service according to the service information.

The processor may also be configured to perform following method.

The specified service may include at least one of a flight service, a high-speed rail service and a group service; and the mode corresponding to the specified service may include at least one of an off mode, a flight mode, a high-speed rail mode and a silent mode.

The service information may include a service name, a service occurrence location, a service start time, a service end time, and a service object.

The method may further include: determining whether the specified service is subscribed by a user.

The determining whether the specified service is subscribed by a user includes:
determining whether the specified service is subscribed via an application; and/or
determining whether a notification message including the service information of the specified service is received.

The acquiring service information of the specified service may include:
acquiring the service information of the specified service from the application; and/or
acquiring the service information of the specified service from the notification message.

The adjusting automatically a handset to a mode corresponding to the specified service at a timepoint corresponding to the specified service according to the service information may include:
prompting a user, before the specified service starts, whether to adjust the handset to the mode; and
adjusting, according to the user's instruction, the handset to the mode and restoring, after the specified service ends, the handset to a previous mode.

The adjusting automatically a handset to a mode corresponding to the specified service at a timepoint corresponding to the specified service according to the service information may include:
determining whether a current location of the handset is consistent with a service occurrence location of the specified service; and
adjusting automatically, when the current location of the handset is consistent with the service occurrence location of the specified service, the handset to the mode corresponding to the specified service at the timepoint corresponding to the specified service.

The adjusting automatically a handset to a mode corresponding to the specified service at a timepoint corresponding to the specified service according to the service information may also include:
determining whether a service object of the specified service is a user of the handset; and
adjusting automatically, when the service object of the specified service is the user of the handset, the handset to the mode corresponding to the specified service at the timepoint corresponding to the specified service.

Before the adjusting automatically a handset to a mode corresponding to the specified service at a timepoint corresponding to the specified service according to the service information, the method may further include:
acquiring updated service information of the specified service.

The acquiring updated service information of the specified service may include:
acquiring, by automatically retrieving from a network server, the updated service information of the specified service according to an identifier of the specified service; and/or
acquiring the updated service information of the specified service by parsing a received notification message.

With respect to the apparatus in the above embodiment, the concrete manner in which each module performs the operation has been described in detail in the embodiment relating to the method, and will not be elaborated herein.

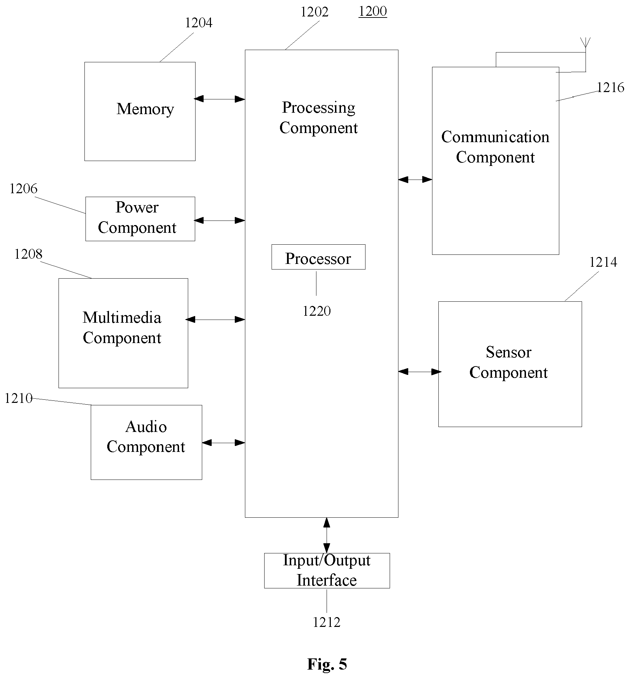

Fig. 5 is a block diagram showing an apparatus for adjusting handset modes according to an exemplary embodiment, which can be used in a terminal device. For example, the apparatus 1200 may be a mobile phone, a computer, a digital broadcast terminal, a message transceiver device, a game console, a tablet device, a medical equipment, a fitness equipment, a personal digital assistant, and the like.

The apparatus 1200 may include one or more of the following components: a processing component 1202, a memory 1204, a power component 1206, a multimedia component 1208, an audio component 1210, an input/output (I/O) interface 1212, a sensor component 1214, and a communication component 1216.

The processing component 1202 typically controls overall operations of the apparatus 1200, such as the operations associated with display, telephone calls, data communications, camera operations, and recording operations. The processing component 1202 may include one or more processors 1220 to execute instructions to perform all or part of the steps in the above described methods. Moreover, the processing component 1202 may include one or more modules which facilitate the interaction between the processing component 1202 and other components. For instance, the processing component 1202 may include a multimedia module to facilitate the interaction between the multimedia component 1208 and the processing component 1202.

The memory 1204 is configured to store various types of data to support the operation of the apparatus 1200. Examples of such data include instructions for any applications or methods operated on the apparatus 1200, contact data, phonebook data, messages, pictures, video, etc. The memory 1204 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1206 provides power to various components of the apparatus 1200. The power component 1206 may include a power management system, one or more power sources, and any other components associated with the generation, management, and distribution of power in the apparatus 1200.

The multimedia component 1208 includes a screen providing an output interface between the apparatus 1200 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, slips, and gestures on the touch panel. The touch sensors may not only sense a boundary of a touch or slip action, but also sense a period of time and a pressure associated with the touch or slip action. In some embodiments, the multimedia component 1208 includes a front camera and/or a rear camera. The front camera and the rear camera may receive an external multimedia datum while the apparatus 1200 is in an operation mode, such as a photographing mode or a video mode. Each of the front camera and the rear camera may be a fixed optical lens system or have focus and optical zoom capability.

The audio component 1210 is configured to output and/or input audio signals. For example, the audio component 1210 includes a microphone ("MIC") configured to receive an external audio signal when the apparatus 1200 is in an operation mode, such as a call mode, a recording mode, and a voice recognition mode. The received audio signal may be further stored in the memory 1204 or transmitted via the communication component 1216. In some embodiments, the audio component 1210 further includes a speaker to output audio signals.

The I/O interface 1212 provides an interface between the processing component 1202 and peripheral interface modules, such as a keyboard, a click wheel, buttons, and the like. The buttons may include, but are not limited to, a home button, a volume button, a starting button, and a locking button.

The sensor component 1214 includes one or more sensors to provide status assessments of various aspects of the apparatus 1200. For instance, the sensor component 1214 may detect an open/closed status of the apparatus 1200, relative positioning of components, e.g., the display and the keypad, of the apparatus 1200, a change in position of the apparatus 1200 or a component of the apparatus 1200, a presence or absence of user contact with the apparatus 1200, an orientation or an acceleration/deceleration of the apparatus 1200, and a change in temperature of the apparatus 1200. The sensor component 1214 may include a proximity sensor configured to detect the presence of nearby objects without any physical contact. The sensor component 1214 may also include a light sensor, such as a CMOS or CCD image sensor, for use in imaging applications. In some embodiments, the sensor component 1214 may also include an accelerometer sensor, a gyroscope sensor, a magnetic sensor, a pressure sensor, or a temperature sensor.

The communication component 1216 is configured to facilitate communication, wired or wirelessly, between the apparatus 1200 and other devices. The apparatus 1200 can access a wireless network based on a communication standard, such as WiFi, 2G, or 3G, or a combination thereof. In one exemplary embodiment, the communication component 1216 receives a broadcast signal or broadcast associated information from an external broadcast management system via a broadcast channel. In one exemplary embodiment, the communication component 1216 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 1200 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 1204, executable by the processor 1220 in the apparatus 1200, for performing the above-described methods. For example, the non-transitory computer-readable storage medium may be a ROM, a RAM, a CD-ROM, a magnetic tape, a floppy disc, an optical data storage device, and the like.

A non-transitory computer readable storage medium, when instructions in the storage medium are executed by a processor of the apparatus 1200, the apparatus 1200 is enabled to perform a method for adjusting handset modes, including:
acquiring, when a specified service is subscribed by a user, service information of the specified service; and
adjusting automatically a handset to a mode corresponding to the specified service at a timepoint corresponding to the specified service according to the service information.

The specified service refers to a service that needs a handset mode to be adjusted during it.

The specified service may include at least one of a flight service, a high-speed rail service and a group service. The mode corresponding to the specified service includes at least one of an off mode, a flight mode, a high-speed rail mode and a silent mode.

The service information may include a service name, a service occurrence location, a service start time, a service end time, and a service object.

The method may further include:
determining whether the specified service is subscribed by a user;
wherein the determining whether the specified service is subscribed by a user includes:
   determining whether the specified service is subscribed via an application; and/or
   determining whether a notification message including the service information of the specified service is received.

The acquiring service information of the specified service may include:
acquiring the service information of the specified service from the application; and/or
acquiring the service information of the specified service from the notification message.

The adjusting automatically a handset to a mode corresponding to the specified service at a timepoint corresponding to the specified service according to the service information may include:
prompting a user, before the specified service starts, whether to adjust the handset to the mode; and
adjusting, according to the user's instruction, the handset to the mode and restoring, after the specified service ends, the handset to a previous mode.

The adjusting automatically a handset to a mode corresponding to the specified service at a timepoint corresponding to the specified service according to the service information may also include:
determining whether a current location of the handset is consistent with a service occurrence location of the specified service; and
adjusting automatically, when the current location of the handset is consistent with the service occurrence location of the specified service, the handset to the mode corresponding to the specified service at the timepoint corresponding to the specified service.

The adjusting automatically a handset to a mode corresponding to the specified service at a timepoint corresponding to the specified service according to the service information may also include:
determining whether a service object of the specified service is a user of the handset; and
adjusting automatically, when the service object of the specified service is the user of the handset, the handset to the mode corresponding to the specified service at the timepoint corresponding to the specified service.

Before the adjusting automatically a handset to a mode corresponding to the specified service at a timepoint corresponding to the specified service according to the service information, the method may further include:
acquiring updated service information of the specified service.

The acquiring updated service information of the specified service may include:
acquiring, by automatically retrieving from a network server, the updated service information of the specified service according to an identifier of the specified service; and/or
acquiring the updated service information of the specified service by parsing a received notification message.

Where functional modules are referred to in apparatus embodiments for carrying out various steps of the described method(s) it will be understood that these modules may be implemented in hardware, in software, or a combination of the two. When implemented in hardware, the modules may be implemented as one or more hardware modules, such as one or more application specific integrated circuits. When implemented in software, the modules may be implemented as one or more computer programs that are executed on one or more processors.

## Claims

1. A method for adjusting handset modes, comprising:
acquiring (101), upon subscribing to a specified service, service information of the specified service; and
adjusting (102) automatically a handset to a mode corresponding to the specified service at a timepoint corresponding to the specified service according to the service information.

2. The method according to claim 1, wherein the specified service comprises at least one of: a flight service; a high-speed rail service; and a group service; and
the mode corresponding to the specified service comprises at least one of: an off mode; a flight mode; a high-speed rail mode; and a silent mode.

3. The method according to claim 1 or 2, wherein the service information comprises a service name, a service occurrence location, a service start time, a service end time, and a service object.

4. The method according to claim 1, 2 or 3, further comprising:
determining whether the specified service is subscribed to by a user;
wherein the step of determining whether the specified service is subscribed to by a user comprises:
determining whether the specified service is subscribed to via an application; and/or
determining whether a notification message comprising the service information of the specified service is received.

5. The method according to claim 4, wherein the step of acquiring service information of the specified service comprises:
acquiring the service information of the specified service from the application; and/or
acquiring the service information of the specified service from the notification message.

6. The method according to any of the preceding claims, wherein the step of adjusting automatically a handset to a mode corresponding to the specified service at a timepoint corresponding to the specified service according to the service information comprises:
prompting a user, before the specified service starts, whether to adjust the handset to the mode; and
adjusting, according to the user's instruction, the handset to the mode and restoring, after the specified service ends, the handset to a previous mode.

7. The method according to any of the preceding claims, wherein the step of adjusting automatically a handset to a mode corresponding to the specified service at a timepoint corresponding to the specified service according to the service information comprises:
determining whether a current location of the handset is consistent with a service occurrence location of the specified service; and
adjusting automatically, when the current location of the handset is consistent with the service occurrence location of the specified service, the handset to the mode corresponding to the specified service at the timepoint corresponding to the specified service.

8. The method according to any of the preceding claims, wherein the step of adjusting automatically a handset to a mode corresponding to the specified service at a timepoint corresponding to the specified service according to the service information comprises:
determining whether a service object of the specified service is a user of the handset; and
adjusting automatically, when the service object of the specified service is the user of the handset, the handset to the mode corresponding to the specified service at the timepoint corresponding to the specified service.

9. The method according to any of the preceding claims, further comprising, before the step of adjusting automatically a handset to a mode corresponding to the specified service at a timepoint corresponding to the specified service according to the service information:
acquiring updated service information of the specified service.

10. The method according to claim 9, wherein the step of acquiring updated service information of the specified service comprises:
acquiring, by automatically retrieving from a network server, the updated service information of the specified service according to an identifier of the specified service; and/or
acquiring the updated service information of the specified service by parsing a received notification message.

11. An apparatus for adjusting handset modes, comprising:
an acquisition module (402) configured to acquire, upon a user subscribing to a specified service, service information of the specified service;
an adjustment module (403) configured to adjust automatically a handset to a mode corresponding to the specified service at a timepoint corresponding to the specified service according to the service information.
group

12. The apparatus according to claim 11, further comprising:
a determination module (401) configured to determine whether the specified service is subscribed by the user;
wherein the determination module (401) comprises:
a first determination submodule (4011) configured to determine whether the specified service is subscribed via an application; and/or
a second determination submodule (4012) configured to determine whether a notification message comprising the service information of the specified service is received.

13. The apparatus according to claim 11 or 12, wherein the acquisition module (402) comprises:
a first acquisition submodule (4021) configured to acquire the service information of the specified service from the application; and/or
a second acquisition submodule (4022) configured to acquire the service information of the specified service from the notification message.

14. The apparatus according to claim 11, 12 or 13, wherein the adjustment module (403) comprises:
a prompt submodule (4031) configured to prompt the user, before the specified service starts, whether to adjust the handset to the mode; and
a first adjustment submodule (4032) configured to adjust, according to the user's instruction, the handset to the mode and restore, after the specified service ends, the handset to a previous mode.

15. A computer program, which when executed on a processor, performs the method according to any of claims 1 to 10.
